Europäisches Patentamt

European Patent Office

Office européen des brevets

(11) Publication number: **0 290 678**
**A1**

# EUROPEAN PATENT APPLICATION

(21) Application number: **87200820.6**

(22) Date of filing: **05.05.87**

(51) Int. Cl.4: **G01C 11/00**

(43) Date of publication of application:
**17.11.88 Bulletin 88/46**

(84) Designated Contracting States:
**AT BE CH DE ES FR GB GR IT LI LU NL SE**

(71) Applicant: **Bogaerts, M.J.M.**
**Zagwijnlaan 5**
**NL-3055 WV Rotterdam(NL)**

(72) Inventor: **Bogaerts, M.J.M.**
**Zagwijnlaan 5**
**NL-3055 WV Rotterdam(NL)**

(54) **A new geodetic method for measuring and calculating coordinates.**

(57) A new geodetic method for measuring and calculating coordinates is described. The new method consists of the surveying and the calculation of coordinates of a number of points in the field, in which the mutual position of the stations of the surveying-instrument is not calculated. The surveying-instrument can be a photographic or electronic camera that makes circular views. In a processing instrument the directions to the points in the field concerned are measured. When every point in the terrain, which is to be calculated in coordinates, is measured from two stations respectively pictures the coordinates of all relevant points in the field can be calculated with the aid of a computer programme.

EP 0 290 678 A1

## A NEW GEODETIC METHOD FOR MEASURING AND CALCULATING COORDINATES

### Description

Practically every country has one or more coordinate-systems to be able to define characteristic points in the field (topography). By means of these coordinates topographic objects, i.e. houses, premises and parcels, can be mapped. The survey method which occurs most in the terrestrial geodesy to calculate coordinates is tacheometry.

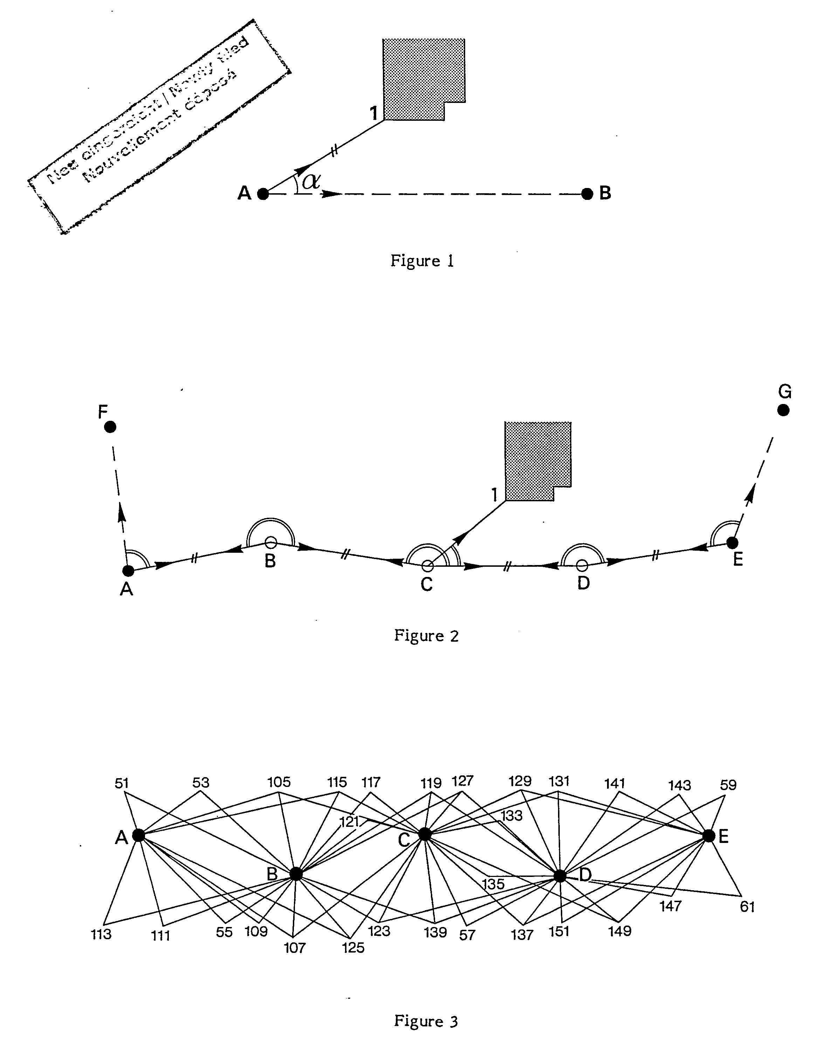

Using a tacheometer the direction from the station of the instrument to a detail point is to be measured. See figure 1.

If A and B are known points in coordinates, then with a tacheometer angle $\alpha$ is measured and also the length A→1.

Now the coordinates of point 1 can be calculated, because in triangle A-1-B two lengths A-1 and A-B are known and the angle contained $\alpha$. Length A-1 and angle $\alpha$ are to be measured, while length AB can be calculated from the known coordinates.

In geodesy the basic points that have to be known in coordinates (stations for tacheometry) are calculated in coordinates according to a well-known measuring and calculating method, called the traverse method.

In figure 2 the coordinates of the points B,C and D, between the known points A and E are calculated by using the data of:

-known coordinates of A, F, E and G;

-measured angles FAB; ABC; BCD; CDE; DEG;

-measured lengths AB; BC; CD; DE.

After that the coordinates of angular point 1 of the house can be calculated in the same way as in figure 1, but now by using the meanwhile known points C and D.

This method is rather cumbrous, especially in urban areas. In the measurements in point C not only the direction and distance to the detail points 1,2 etc. have to be measured, but at the same time also an exact traversing for the points B and D takes place. For that purpose in these points precise traversing targets (marks) are staioned during the entire measurement in point C.

This means that for a tacheometric survey a large party of surveyors is needed, that sometimes - due to difficult traffic situations - works very slowly, or - due to bad weather conditions - can come to a standstill completely.

The existing tacheometric survey thus has three disadvantages:

1. at the same time of the detail measurement a labour-intensive traversing has to be executed;

2. chainmen have to put targets on the detail points which are to be measured, in order to measure the direction and distance to them;

3. because measurements take place outdoor loss of time occurs due to lay-off time caused by the weather.

The new method obviates these difficulties. The method of measurement is shown in figure 3. The new method starts from the principle that:

- mutual measurements to the stations of the surveyor's instrument A, B, C, D and E do not take place, anymore. The coordinates of these points are not calculated;

- every detail point is to be measured from at least two stations;

- the detail points are to be photographed or scanned electronically in order to be able to process the measurement indoor;

- two or more detail points in coordinates are known, in order to be able to calculate the coordinates of the other detail points.

To realize this new geodetic method several hard-en software components are needed:

1. a camera that makes photographic or electronic views of the entire horizon;

2. a processing instrument by which, with the aid of pictures (photographs) directions are measured towards the detail points that are to be calculated in coordinates;

3. an interface between the processing instrument and the computer programme to supply the measurement with codes, to execute checks, etc.;

4. a computer programme to calculate the coordinates of the measured detail points. These coordinates are to be calculated two-dimensionally (x,y) as well as three-dimensionally (x,y,z).

### Claims

A new geodetic method for surveying and calculation of coordinates, using a specially designed 400 gon fish-eye horizon camera and a specially designed processing system, producing x,y,z coordinates, characterized by the fact that:

a. it is not necessary to know the position (in coordinates) of the stations where the exposures have been made;

b. it is not necessary to place targets in the points to be calculated in coordinates;

c. the processing of the measurements takes place indoor.

0 290 678

Figure 1

Figure 2

Figure 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | NL-A-8 401 113 (M. BOGAERTS)<br>* Whole document *<br>----- | 1 | G 01 C 11/00 |

TECHNICAL FIELDS SEARCHED (Int. Cl.4)

G 01 C 11/00

The present search report has been drawn up for all claims

| Place of search | Date of completion of the search | Examiner |
|---|---|---|
| THE HAGUE | 24-08-1988 | DE BUYZER H.J. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)